# EUROPEAN PATENT SPECIFICATION

(11) **EP 1 410 945 B1**
(45) Date of publication and mention of the grant of the patent: **15.02.2006**
(21) Application number: 01960737.3
(22) Date of filing: 26.07.2001
(51) Int. Cl.: B60N 2/36, B60N 2/20, E05B 65/12

(54) **REAR SEAT LOCK FOR VEHICLES**
RÜCKSITZVERRIEGELUNG FÜR FAHRZEUGE
VERROU DE SIEGE ARRIERE POUR VEHICULES

(43) Date of publication of application: 21.04.2004
(73) Proprietor: GRUPO ANTOLIN-INGENIERIA, S.A., 09007 Burgos (ES)
(72) Inventor: VERMEULEN, Mauricio, E-09003 Burgos (ES)
(74) Representative: Esteban Perez-Serrano, Maria Isabel
(86) International application number: PCT/ES2001/000301
(87) International publication number: WO 2003/010026

(56) References cited:
- EP-A- 0 952 288
- DE-C- 19 916 811
- US-A- 3 655 240
- PATENT ABSTRACTS OF JAPAN vol. 014, no. 388 (M-1014), 22 Agosto 1990 (1990-08-22) & JP 02 144484 A (OI SEISAKUSHO CO LTD), 4 Junio 1990 (1990-06-04)

## Description

This invention relates to a rear seat lock for vehicles and more specifically to the technique related with anchoring systems for folding rear seats (see, for example, EP-A-0 952 288, corresponding to the preamble of claim 1).

Up to now, the usual technique to release the seat locks has been mechanical, with operating systems such as handles, push-buttons or levers being used for this purpose.

These mechanical operating systems have several disadvantages, such as the following:

The operating system is visible in the back of the seat and, as a result, has to have a design suited to the style of the car so as to prevent possible contact with occupants in case of accident.

The distance between the anchoring system for the lock and the upper part of the seat back has an influence on the design of the seat back and of the lock, causing problems in the mechanical design of the opening system, which results in complicated assemblies and increases in the opening effort.

In order to prevent access to the boot of the vehicle, a key is usually used that locks the rear seat lock opening system. Locking and unlocking the system is certainly difficult due to the position of the seat lock. At the same time, the assembly of the key operated system is complicated, as there is a tendency to use the same key for the entire vehicle.

Another solution in order to prevent access to the boot and lock the mechanical systems is based on a lever in the boot area of he seat back, which prevents opening of the seat lock or enables it to be opened.

Opening efforts on the mechanical systems are very variable due to the different assembly situations of the seats and to the anchoring position of the lock in the steel sheet of the vehicle bodywork.

On many occasions and due to the existing tolerances, the opening efforts exceed those specified by regulations, leading to the setting of regulations which are not ergonomic.

As the mechanical operating systems for opening are in the seat itself, there is the risk that if the locks are not locked, either with a key or with another system, children might play with them and open them. This means danger, because when the vehicle is slowing down, the load in the boot might move against the seat back and this might affect occupants.

Some mechanical locks include an opening system which is operated from the boot in order to prevent an occupant from being trapped inside the said boot.

The basic object of the invention is to provide a rear seat lock which is electrically operated.

Another object of the invention is to provide a rear seat lock that does not require a mechanical operating system for its opening, but uses a simple switch that includes an indicator of whether the lock is open, normally red in colour, or closed, normally green.

Another object of the invention is the lack of any visible or protruding mechanical item, thus preventing safety problems in case of possible contact with the operating system in case of collision.

Another object of the invention is to provide a rear seat lock that prevents children sitting in the rear seat from being able to play or tamper with the lock and open it, since opening is carried out by means of a switch which can be located on the dashboard, in the side door, etc., and always away from the rear seat, with the driver in any case being responsible for its operation

Another object of the invention is to provide a rear seat lock that totally prevents the problem of opening efforts or stresses on the mechanism.

Another object of the invention is to provide a rear seat lock that does not require any kind of key or mechanical operating system in order to prevent its opening, as operation is carried out by means of a switch, which receives voltage from the vehicle once the ignition key has been turned.

Another object of the invention is to provide a rear seat lock that includes a mechanical system operated by a cable or wire, in order to operate the lock in case of a voltage failure or when somebody becomes locked inside the boot.

Another object of the invention is to provide a rear seat lock which is simple to assemble and does not have any restriction on the anchoring position of the lock, as it can be located at any height on the steel sheet of the vehicle bodywork.

In order to put these objectives into practice, the invention partly uses the technique shown by WO-A-01/14166, by applying the combination of a trigger and a pawl or ratchet suitably connected to each other, with the action of the pawl, which retains or releases the trigger, being carried out through an electric motor in its normal operation and by means of a mechanical system if there is a voltage failure in the vehicle.

In the state of the art locking devices are known as the one disclosed in the above-mentioned EP-A- 952288, wherein a locking is shown which comprises a pawl and a trigger connected to each other by a spring and whose profiles make different contact to cause the opening or closing of a bolt from a bodywork. Nevertheless this locking can be improved avoiding certain drawbacks derived from its own nature. The aim of the present invention is to get a rear seat lock remotely actuated, wherein no mechanical means is needed for its opening, without any visible or protruding mechanism, and which eliminates the problems derived from opening efforts or stresses of the mechanical parts, having additionally mechanical means being used in case of voltage failure.

The rear seat lock is mounted on a central casing which is the support for the different component items and which has at least one side opening that allows the passage of the bolt that comes from the vehicle bodywork, when the lock is open, or which is enclosed by the trigger with the said bolt included, in the case of the closed lock, as shown in the above mentioned WO-A-01/14166.

The casing in question is fixed to the side of the seat back and is concealed by a cover that protects the mechanisms, with the exception, of course, of the side opening for the bolt from the vehicle bodywork.

Secured to one side of the casing are the trigger and the pawl, as well as the emergency operating system, while on the other side of the casing are the electric motor equipped with a worm screw on its takeoff shaft, a crown wheel operated by this worm screw, a cam connected to this crown wheel with a spring and two microswitches.

The casing has a vertical section provided with a stepping that separates two parallel surface areas. Situated above this stepping are the trigger, the pivoting point for the pawl and the pawl itself, partially.

Located below this said stepping are the motor, the crown wheel, the cam and the microswitches, as well as a rocker part and an arm for the emergency operating system.

In the above mentioned stepping there is an opening, through which a suitably shaped lower portion of the pawl passes from one side of the casing to the other, so that it allows the pawl to be operated by the electric operating system and, when necessary, by the emergency mechanism.

The lower end of the pawl is provided with a small wheel that rests on the edge or profile of the cam moved by the crown wheel and the motor. By the effect of the cam movement, two end positions of the pawl are produced: one upward, in the lock open position, in which the pawl makes contact with one of the microswitches, and the other downward, in the lock closed position, in which the cam itself makes contact with the other microswitch.

In the first position of the pawl, the trigger opens the entrance for the bolt from the vehicle bodywork, whereas in the second position, the trigger closes this entrance.

The cam and the crown wheel are mounted on the same axis, and the crown wheel has a turret that becomes housed in a cut-out in the cam, which enables the transmission of movement from the motor to the cam, via the crown wheel, to be smooth. The cutout provides an idle stroke in which the crown wheel turns.

The cam is connected to a spring with a base on the pivoting point and with one arm fixed to the crown wheel, which becomes tensed or tightened during the turning of the cam, enabling smooth transmission of the movement from the motor to the pawl.

The two microswitches make it possible to know the two positions, open and closed, of the lock, and also to prevent the motor from continuing to turn once a given position has been reached.

Situated on the rear side of the position of these items is a rocker part for opening the boot, which receives the end of the cable anchored to the seat back. This rocker part turns at its opposite end to that of the cable and is equipped with a cutout in its central area which is situated at the end of an arm connected in turn to the pawl, above the offset in it. When for any unusual circumstances, there is a voltage failure in the vehicle, by pulling on the cable, the rocker part is made to turn and the arm travels along the cut-out until it reaches the end, when it pulls on the pawl, which turns on its axis and releases the trigger.

When the voltage in the vehicle is operating, the existence of the cutout in the rocker part allows the arm to travel freely inside it, without any action of the said arm on the pawl.

As far as it is concerned, the pivoting point of the rocker part includes a spring that allows the rocker part to return to its position, once the mechanical opening system has been operated from the boot of the vehicle, in order to allows any person trapped inside the boot to be released.

The cable that reaches the rocker part runs through the interior of the assembly until it is taken in inside a duct that directs it towards a control anchored in the back of the seat.

As indicated previously, the electric lock, when it is mounted and located on the side of the seat back, only has the position of the trigger visible, logically closed over the bolt from the vehicle bodywork, making it impossible to operate from the exterior and so increasing its level of safety.

Each and every one of the particulars of the invention can be appreciated in detail on the accompanying sheets of drawings, on which the following are shown:
- Figure 1 is a plan view of the seat lock mechanism seen from the electric motor side, in the open position.
- Figure 2 shows the detail of the motor cover that allows the mechanisms below the crown wheel to be seen.
- Figure 3 is a plan view of the mechanism in the closed position.
- Figure 4 is a view of the rear side of the mechanism in the lock closed position.
- Figure 5 is another view of the rear side of the mechanism in the lock closed position.

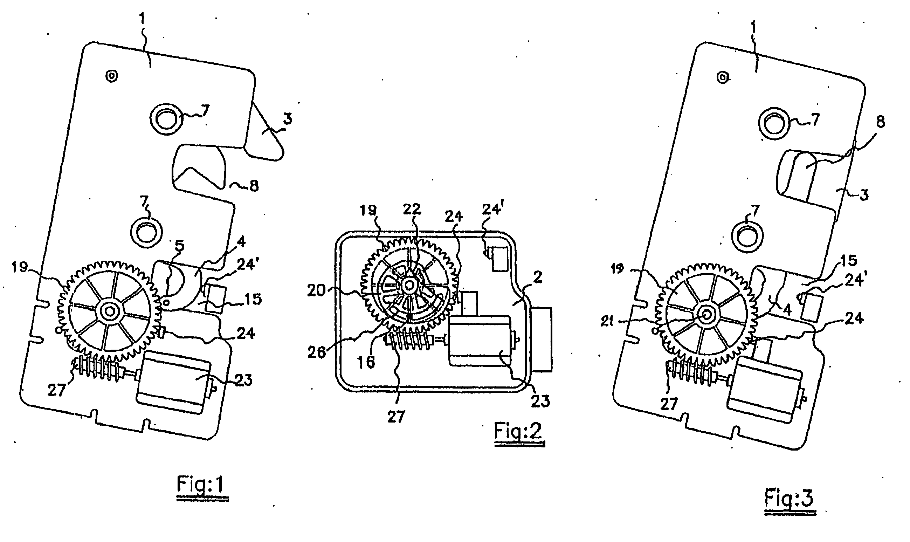

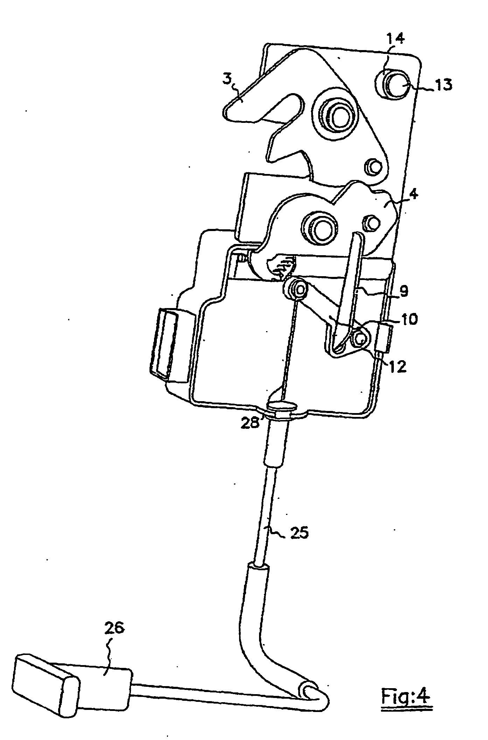

In accordance with Figures 1 and 4, we can appreciate the casing (1) on which the bearings (7), the trigger (3) and the pawl (4) are mounted and are connected with each other. The trigger is in a position to allow the entry of the bolt from the vehicle bodywork into the opening (8). The pawl (4) extends in a plane that also contains the trigger (3) in the rear part of the casing (1), and at the central opening (15) undergoes an offset and passes to the front side of the casing where the motor (23) is to be found, and it can be appreciated that its free end is provided with a wheel (5).

On its takeoff shaft, the motor (23) has a worm screw (27) that moves the toothed crown wheel, causing it to turn. Below this crown wheel (19 - Fig. 2), the cam (20) can be seen, mounted on the same axis as the crown wheel.

The rear side of the crown wheel is provided with a turret (16) which is housed in a cutout (26) in the cam, giving rise to the idle stroke previously considered. As for the cam, it includes the spring (22) secured by one end to the crown wheel, which spring is tensed or tightened by the movement of the crown wheel during this idle stroke.

In this same Figure 2, we can appreciate the position of the two microswitches (24, 24'). One of them (24') is connected by the most outer end of the cam (20) itself when the assembly is in the closed position. When the cam turns, the wheel (5) of the pawl (4) makes the latter turn until the said wheel travels along the profile of the cam until it occupies the position of the most outer part of the said cam, with the pawl making contact with the other switch, as shown in Figure 1.

From Figure 3, it is possible to appreciate the closed position of the mechanism, with the lower end of the pawl distant from the switch (24) and the trigger (3) closing over the bolt lodged in the opening (8).

The turning actions of the motor in one direction or the other bring about the movement of the pawl in order to achieve the resulting turning of the trigger. These movements of the motor, as stated previously, are carried out from a position which is usually distant from the lock itself, for example on the dashboard or in the driver's side door, where the driver can operate the system.

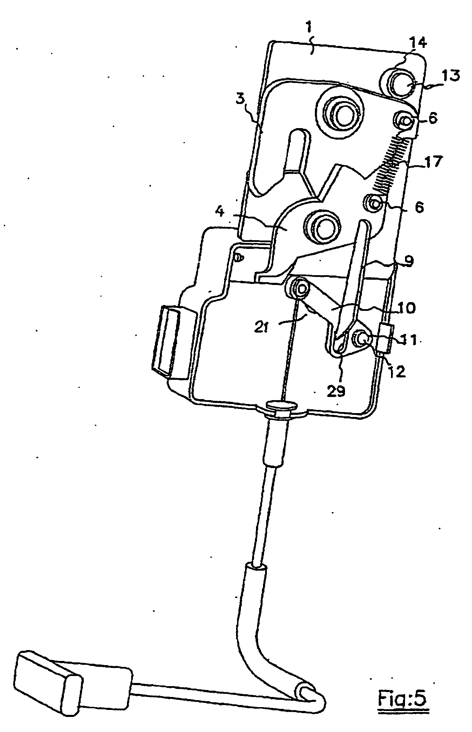

According to Figures 4 and 5, we can observe the position of the rocker part (10) used for opening the boot connected to the cable (28), which at its outlet is clamped and led into the interior of the duct (25) to the end (26) located in the rear part of the seat back. The spring for opening is connected onto the rivet (12).

This rocker part is provided with a cutout (29) in which the lower end of the mechanical arm (9), for manual opening, moves. When the electrical operating system is in movement, this cutout enables the turning of the pawl (4) and consequently of the arm (9) not to have an influence on the rocker part, as the arm (9) travels freely inside this cutout (29).

However, when the electric operating system is not working, due to voltage failure, and when the cable (28) is pulled in the closed position shown in Figure 5, the rocker part moves the arm (9) and this makes the pawl (4) turn, thus managing to release the trigger (3) and move it to the open position shown in Figure 4.

## Claims

1. Rear seat lock, particularly for automobiles and similar, with a casing (1) in which a pawl (4) and a trigger (3) are situated and turn, connected to each other by a spring (17) and whose profiles make different contacts in order to cause the opening or closing of a bolt from the bodywork of the vehicle that becomes housed in an opening (8) in the said casing, by means of the change of position of the trigger in relation to the said opening, which is **characterised in that** the operating means for the pawl (4) that causes the turning of the trigger (3) in order to open or close the lock, is electric and it is controlled from a position which is remote from the lock in the rear seat, and **in that** the lock has not any visible accessories with the exception of the opening (8) for the passage of the bolt from the bodywork of the vehicle and the trigger (3).

2. Rear seat lock, in accordance with claim 1, **characterised in that** an electric motor (23) is used, operated by means of a switch in a position accessible to the driver,

3. Rear seat lock, particularly for automobiles and similar, in accordance with claim 1, which is **characterised in that** the casing (1) which is used for the seating and turning for the pawl (4) and the trigger (3) has a stepping that forms two surface areas, one upper area for the trigger and the pawl and another lower area, in which an opening (15) is created in the said stepping, through which a lower end of the pawl, which also has a stepped shape, has access to the lower surface area, and with this end having a wheel (5) that turns, supported on the profile or edge of a cam (20), mounted on an axis over the said lower surface area, and with a toothed crown wheel (19) being situated over this axis and engaged with a worm screw (27) from the electric motor (23) takeoff shaft, **in that** the cam, in its turning movements, pulls the pawl (4), and having two microswitches (24, 24') connected to the said motor, one operated by the most outer end of the cam and the other by the pawl itself on its wheel reaching the said end of the cam.

4. Rear seat lock, in accordance with claim 3, **characterised in that** the cam (20) has a cutout (26) in which a turret (16) from the toothed crown wheel (19) moves, and **in that** the cam has a spring (22) secured by one of its ends to the crown wheel.

5. Rear seat lock, in accordance with claim 3, **characterised in that** on the lower side of the casing and at the rear of the position of the motor, crown wheel and cam, the rocker party (10) for opening the boot has a central cutout (29), in which the end of the arm (9) fixed to the pawl (4) moves.

## Patentansprüche

1. Rücksitzschloss, besonders für Automobile und Ähnliches mit einem Gehäuse (1), in dem sich eine Sperrvorrichtung (4) und ein Auslöser (3) befinden und sich drehen, verbunden untereinander mittels einer Feder (17) und deren Profile untereinander verschiedene Kontakte auslösen, um das Öffnen oder Schliessen eines Bolzens von der Karrosserie des Fahrzeugs zu bewirken, das in einer Öffnung (8) in dem besagten Gehäuse aufgenommen wird, indem die Position des Auslösers in Bezug zu dem besagten Gehäuse verändert wird, **dadurch gekennzeichnet, dass** die Bedienelemente für die Sperrvorrichtung (4), die das Drehen des Auslösers (3) auslöst, um das Schloss zu öffnen oder zu schliessen, elektrisch ist und es von einer Femposition von Schloss am Rücksitz kontrolliert wird und **dadurch**, dass das Schloss kein sichtbares Accessoires hat mit Ausnahme einer Öffnung (8) für das Durchführen eines Bolzens von der Karrosserie des Fahrzeugs und eines Auslösers (3).

2. Rücksitzschloss gemäss Anspruch 1, **dadurch gekennzeichnet, dass** ein elektrischer Motor (23) verwendet wird, der mittels eines Schalters in einer dem Fahrer zugänglichen Position bedient wird.

3. Rücksitzschloss, besonders für Automobile und Ähnliches gemäss Anspruch 1, **dadurch gekennzeichnet, dass** das Gehäuse (1), das für das Einsetzen und Drehen der Sperrvorrichtung (4) und des Auslösers (3) verwendet wird, eine Abstufung aufweist, die zwei Oberflächen bildet, eine obere und eine untere für die Sperrvorrichtung und den Auslöser und einen weiteren unteren Bereich, in dem eine Öffnung (15) der besagten Abstufung gebildet ist, durch die das untere Ende der Sperrvorrichtung, die auch eine abgestufte Form aufweist, Zugang zu der unteren Oberfläche hat und dieses Ende über ein Rad (5) verfügt, das sich dreht, aufgelagert auf dem Profil oder der Kante einer Nocke (20), aufgesetzt auf einer Achse über der unteren Oberfläche und mit einem gezahnten Kronrad (19), das sich über der Achse befindet und mit einer Gewindeschraube (27) des Antriebsschafts des elektrischen Motors (23) verbunden ist, in dem die Nocke bei ihren Drehbewegungen an der Sperrvorrichtung (4) zieht und über zwei Mikroschalter (24, 24') verfügt, die an den besagten Motor angeschlossen sind, von denen einer durch das äusserste Ende der Nocke bedient wird und das andere durch die Sperrvorrichtung selbst bei Erreichen des besagten Endes der Nocke durch das Rad.

4. Rücksitzschloss gemäss Anspruch 3, **dadurch gekennzeichnet, dass** die Nocke (20) einen Einschnitt (26) aufweist, in dem sich ein Spulenrad (16) des gezahnten Kronrads (19) bewegt und **dadurch**, dass die Nocke über eine Feder (22) verfügt, deren eines Ende an dem Kronrad befestigt ist.

5. Rücksitzschloss gemäss Anspruch 3, **dadurch gekennzeichnet, dass** auf der unteren Seite des Gehäuses und auf der Rückseite der Position des Motors, des Kronrads und der Nocke der Wippteil (10) für das Öffnen des Auslösers über eine zentrale Aussparung (29) verfügt, in der sich das Ende des Arms (9) bewegt, der an der Sperrvorrichtung (4) befestigt ist.

## Revendications

1. Verrou de siège arrière, particulièrement pour automobiles et analogues, avec une chemise (1) dans laquelle un cliquet (4) et une gâchette (3) sont situés et tournent, connectés l'un à l'autre par un ressort (17) et dont les profils font différents contacts afin de provoquer l'ouverture ou la fermeture d'un pêne de la carrosserie du véhicule qui est alors logé dans une ouverture (8) dans la dite chemise, au moyen d'un changement de position de la gâchette par rapport à ladite ouverture, qui est **caractérisé en ce que** le moyen d'ouverture du cliquet (4) qui provoque la rotation de la gâchette (3) afin d'ouvrire ou fermer le verrou, est électrique et il est commandé à partir d'une position à distance du verrou du siège arrière, et **en ce que** le verrou n'a aucun accessoire visible à l'exception de l'ouverture (8) pour le passage du pêne de la carrosserie du véhicule et de la gâchette.

2. Verrou de siège arrière, selon la revendication 1, **caractérisé en ce que** l'on utilise un moteur électrique (23), entraîné au moyen d'un commutateur dans une position accessible au conducteur.

3. Verrou de siège arrière, particulièrement pour automobiles et analogues, selon la revendication 1, qui est **caractérisé en ce que** la chemise (1) qui est utilisée pour l'assise et la rotation du cliquet (4) et de la gâchette (3) a un échelonnement qui forme deux aires superficielles, une aire supérieures pour la gâchette et le cliquet et une autre aire inférieure, dans laquelle une ouverture (15) est aménagée dans ledit échelonnement, à travers laquelle une extrémité inférieure du cliquet, qui a également une forme échelonnée, a accès à l'aire superficielle inférieure, cette extrémité ayant une roue (5) qui tourne, appuyée sur le profil ou le bord d'une came (20), montée sur un axe sur ladite aire superficielle inférieure, et avec une roue de couronne dentée (19) située sur cet axe et en prise avec une vis sans fin (27) de l'arbre de prise de mouvement du moteur électrique (23), **en ce que** la came, lors de ses mouvements de rotation, entraîne le cliquet (4), et ayant deux microcommutateurs (24, 24') connectés audit moteur, l'un entraîné par l'extrémité la plus extérieure de la came et l'autre par le propre cliquet sur sa roue qui atteint ladite extrémité de la came.

4. Verrou de siège arrière, selon la revendication 3, **caractérisé en ce que** la came (20) a une entaille (26) dans laquelle se déplace une tourelle (16) de la roue de couronne dentée (19), et **en ce que** la came a un ressort (22) fixé par une de ses extrémités à la roue de couronne.

5. Verrou de siège arrière, selon la revendication 3, **caractérisé en ce que** sur le côté inférieur de la chemise et à l'arrière de la position du moteur, de la roue de couronne et de la came, le balancier (10) pour ouvrir le coffre a un entaille centrale (29), dans laquelle se déplace l'extrémité du bras (9) fixée au cliquet (4).
